# EUROPÄISCHE PATENTSCHRIFT

(11) **EP 3 708 039 B1**
(45) Veröffentlichungstag und Bekanntmachung des Hinweises auf die Patenterteilung: **30.09.2026**
(21) Anmeldenummer: 20161961.6
(22) Anmeldetag: 10.03.2020
(51) Int. Cl.: A47J 31/44

(54) **KAFFEEAUTOMAT**
COFFEE MACHINE
MACHINE À CAFÉ

(30) Priorität: 15.03.2019 DE 102019203584
(43) Veröffentlichungstag der Anmeldung: 16.09.2020
(73) Patentinhaber: BSH Hausgeräte GmbH, 81739 München (DE)
(72) Erfinder: Mies, Maximilian, 83253 Rimsting (DE); Mathes, Anton, 83364 Neukirchen am Teisenberg (DE); Steininger, Benedikt, 83122 Samerberg (DE)

(56) Entgegenhaltungen:
- EP-A1- 2 055 215
- EP-A1- 2 353 472
- EP-A1- 2 583 596
- EP-A1- 3 398 487
- DE-A1- 4 204 746

## Beschreibung

Die vorliegende Erfindung betrifft einen Kaffeeautomaten mit einer Luftansaugleitung, einer Dampfleitung und einer Milchleitung. Die Erfindung betrifft außerdem ein Verfahren zum Betreiben eines solchen Kaffeeautomaten.

Die Vorteile von Kaffeeautomaten, insbesondere Kaffeevollautomaten, gegenüber herkömmlichen Kaffeemaschinen, sind insbesondere die schnelle Zubereitung und die verschiedenen Einstellmöglichkeiten von Tasse zu Tasse hinsichtlich beispielsweise einer Kaffeeintensität und/oder einer Temperatur. Ein weiterer Vorteil derartiger Kaffeeautomaten ist die automatische Erzeugung von Mixgetränken, beispielsweise Cappuccino oder Latte Macchiato, das heißt Kaffee mit warmer Milch bzw. Milchschaum. Hierzu muss lediglich ein zusätzlicher Behälter mit Milch bereitgestellt und an das System angekoppelt werden. Die Milch besitzt in der Regel keinen eigenen Heizkreislauf und wird daher über den im Kaffeeautomaten erzeugten Dampf erhitzt. Unter Zuschaltung eines Luftstroms wird Milchschaum erzeugt, so dass die zuvor genannten Getränke, wie beispielsweise Cappuccino oder Latte Macchiato, einfach per Knopfdruck erzeugt werden können.

Die Konsistenz und Qualität des hergestellten Milchschaums ist dabei durch vorgegebene, geometrische Parameter zumeist vorbestimmt. Eine separate Steuerung eines Milchflusses, einer Milchtemperatur und/oder des Luftstroms findet sich in der Regel nur bei Profigeräten im gewerblichen Bereich, wofür einige zusätzliche Schalt- und Messkomponenten eingesetzt werden. Derartige Schalt- und Messkomponenten sind jedoch teuer und verteuern dadurch den Kaffeeautomaten, wodurch eine derartige Einstellmöglichkeit für Kaffeeautomaten im Consumer-Bereich, das heißt im nicht-gastronomischen Bereich, nicht vorgesehen wird. Eine Einstellung des Milchschaums bzw. eine Beeinflussung desselben ist für Kaffeeautomaten im Hausgebrauch bislang nicht vorgesehen.

Aus der EP 3 398 487 A1 ist ein Verfahren und eine Vorrichtung zur Erzeugung von Milchschaum mit einstellbarer Temperatur bekannt, umfassend eine Pumpe zum Fördern von Milch aus mindestens einem Behälter in Leitung zu einem Auslass, eine Luftzufuhr zum Zuführen von Luft in die Leitung, einen Durchlauferhitzer und eine Drosseleinrichtung, wobei der Durchlauferhitzer druckseitig der Pumpe und die Drosseleinrichtung stromabwärts des Durchlauferhitzers angeordnet sind.

Die vorliegende Erfindung beschäftigt sich daher mit dem Problem einen Kaffeeautomaten anzugeben, der es insbesondere auch einem Benutzer im nicht gewerblichen Bereich ermöglicht, einen gewünschten Milchschaum variabel einzustellen und dadurch in der Art eines Baristas tätig zu werden.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, mittels eines individuell einstellbaren Beheizens eines einem Milchschäumer zuzuführenden Luftstroms, auch bei Kaffeeautomaten im Consumer-Bereich eine sogenannte Barista-Funktion einfach und kostengünstig zu schaffen, mittels welcher auch ein Verbraucher im privaten Bereich in der Art eines Baristas Einfluss auf einen herzustellenden Milchschaum nehmen kann. Der erfindungsgemäße Kaffeeautomat besitzt dabei eine Luftansaugleitung, eine Dampfleitung sowie eine mit einem Milchreservoir verbindbare Milchleitung, wobei die Dampfleitung und die Milchleitung in einen Milchschäumer münden, in welchem der Milchschaum hergestellt wird. Dabei ist eine erste Heizeinrichtung zur Erzeugung von Wasserdampf vorgesehen, ebenso wie erfindungsgemäß eine zweite Heizeinrichtung zum Beheizen der in der Luftansaugleitung strömenden Luft. Zusätzlich vorgesehen ist eine Steuereinrichtung zum Steuern der Heizleistung zumindest der zweiten Heizeinrichtung. Durch die variable Einstellbarkeit der Temperatur des Luftstroms in dem Kaffeeautomaten lassen sich indirekt Parameter, nämlich die Temperatur und der Massenstrom in der Luftansaugleitung einstellen, worüber wiederum Einfluss auf den herzustellenden Milchschaum genommen werden kann. Hierbei werden erstmals die physikalischen Stoffeigenschaften der zur Herstellung des Milchschaums verwendeten Luft genutzt. Die Luft wird dabei zur Milchschaumerzeugung über einen Unterdruck, welcher sich im Milchschäumer durch den durch die Dampfleitung in den Milchschäumer einströmenden Dampf einstellt, angesaugt. Die Luft wird dabei durch eine Düse mit einem festen Durchmesser in den Milchschäumer eingesaugt, weshalb sich ein Luftstrom, insbesondere ein Luftmassenstrom, folglich aus einer Druckdifferenz ergibt. Um diesen Luftstrom nun variieren zu können, ist die zweite Heizeinrichtung vorgesehen, womit die in dem Luftansaugkanal strömende Luft auf unterschiedliche Temperaturniveaus gebracht werden kann. Physikalisch gesehen sinkt dabei die Dichte der Luft mit zunehmender Temperatur, während die dynamische Viskosität gleichzeitig ansteigt. Der Massenstrom der Luft steht somit in direkter Abhängigkeit zu diesen beiden Größen und variiert entsprechend mit diesen. Hierdurch lassen sich das Dampf-Luft-Milchverhältnis und damit auch der Milchschaum bzw. Parameter des Milchschaums beeinflussen. Durch die Reduzierung oder Erhöhung des Luftanteils kann das Volumen des Milchschaums bei gleicher Dampfdauer verändert werden. Der zusätzliche Einfluss auf die Endtemperatur des Milchschaums ist aufgrund der geringen Wärmekapazität der Luft selbst bei einem stärkeren Erhitzen derselben mittels der zweiten Heizeinrichtung nur marginal. Mit dem erfindungsgemäßen Kaffeeautomaten ist es somit erstmals möglich, eine bislang nur bei gewerblichen Gastronomiegeräten vorhandene Barista-Funktion auch in den Consumer-Bereich zu übertragen, ohne dass hierfür zusätzliche und teure Schalt- und Messkomponenten erforderlich sind.

Bei einer vorteilhaften Weiterbildung der erfindungsgemäßen Lösung sind die erste und die zweite Heizeinrichtung separat zueinander ausgebildet, wobei alternativ auch denkbar ist, dass die erste und die zweite Heizeinrichtung Bestandteil einer gemeinsamen Heizanordnung sind. Bei der ersten Alternative kann der Aufbau des Kaffeeautomaten nahezu unverändert bleiben, wobei lediglich noch die zweite Heizeinrichtung zum Beheizen der in der Luftansaugleitung strömenden Luft vorgesehen werden muss, ebenso wie die Steuereinrichtung. Bei der zweiten Alternative ist es sogar denkbar, die für das Beheizen der Luft in der Luftansaugleitung erforderliche zweite Heizeinrichtung in die erste Heizeinrichtung zu integrieren, so dass diese lediglich hinsichtlich der Heizfunktion der Luft entsprechend angepasst werden muss. Dabei dürfte es ausreichen, die bei der bislang bereits vorhandenen ersten Heizeinrichtung vorhandene Heizleistung zur Dampferzeugung auch zur Erwärmung des in der Luftansaugleitung strömenden Luftstroms zu nutzen, wodurch auf eine separate zweite Heizeinrichtung gänzlich verzichtet werden kann, sofern beispielsweise die Luftansaugleitung wärmeübertragend mit der ersten Heizeinrichtung verbunden wird.

Zweckmäßig ist die zweite Heizeinrichtung wärmeübertragend mit der Luftansaugleitung verbunden und beheizt die darin strömende Luft durch ein Beheizen der Luftansaugleitung. Entsprechende Heizdrähte können dabei beispielsweise in einer Wandung der Luftansaugleitung verlegt sein. Hierdurch kann die zweite Heizeinrichtung bauraumoptimiert in dem Kaffeeautomaten angeordnet werden, so dass vorzugsweise nahezu kein zusätzlicher Bauraumbedarf erforderlich ist.

Bei einer weiteren vorteilhaften Ausführungsform der erfindungsgemäßen Lösung ist an der Steuereinrichtung ein Milchschaum-Wahlschalter vorgesehen, über welchen unterschiedliche Milchschaumarten auswählbar sind, wobei unterschiedlichen Milchschaumarten unterschiedliche Heizleistungen der zweiten Heizeinrichtung zugeordnet sind. So können beispielsweise der Luftanteil im Milchschaum und damit das Volumen des Milchschaums erhöht werden, indem die zweite Heizeinrichtung die in der Luftansaugleitung strömende Luft beheizt. Durch die erhöhte Lufttemperatur weist die dem Milchschäumer zugeführte Luft eine geringere Dichte und eine höhere dynamische Viskosität auf, wodurch während der gleichen Dampfdauer und der gleichen Zubereitungsdauer ein höherer Luftanteil dem Milchschäumer zugeführt wird und dadurch das Volumen des Milchschaums vergrößert werden kann. Durch die Erwärmung der dem Milchschäumer zugeführten Luft kann selbstverständlich auch ein positiver Effekt auf die Milchschaumtemperatur werden, wobei dieser positive Effekt aufgrund der geringen Wärmekapazität der Luft nur marginal sein dürfte.

Die vorliegende Erfindung beruht weiter auf dem allgemeinen Gedanken, ein Verfahren zum Betreiben eines Kaffeeautomaten anzugeben, bei dem Dampf über eine Dampfleitung zu einem Milchschäumer geleitet und zuvor mittels einer ersten Heizeinrichtung erzeugt wird. Ebenso wird bei dem erfindungsgemäßen Verfahren Luft über eine Luftansaugleitung sowie Milch über eine mit einem Milchreservoir verbundene Milchleitung angesaugt und zum Milchschäumer geleitet. Eine Einstellung zumindest eines Milchschaumparameters, insbesondere eines Porenvolumens, erfolgt dabei über ein Einstellen der Heizleistung einer zweiten Heizeinrichtung zum Beheizen der in der Luftansaugleitung strömenden Luft. Soll somit beispielsweise der im herzustellenden Milchschaum vorhandene Luftporenanteil reduziert werden, so wird die in der Luftansaugleitung strömende Luft nicht oder nur geringfügig beheizt, was über die Steuereinrichtung vergleichsweise einfach einstellbar ist. Wird ein größeres Milchschaumvolumen angestrebt und damit auch ein höherer Luftporenanteil, so kann über die Steuereinrichtung die in der Luftansaugleitung strömende und vom Milchschäumer angesaugte Luft stärker beheizt werden.

Bei einer vorteilhaften Weiterbildung des erfindungsgemäßen Verfahrens erfolgt die Einstellung zumindest eines Milchschaumparameters, beispielsweise des Milchschaumvolumens, über einen Milchschaum-Wahlschalter an der Steuereinrichtung, über welchen unterschiedliche Milchschaumarten auswählbar sind, wobei den unterschiedlichen ausgewählten Milchschaumarten unterschiedliche Heizleistungen der zweiten Heizeinrichtung zugeordnet sind. Durch einen derartigen Milchschaum-Wahlschalter lässt sich das gewünschte Milchschaumvolumen vergleichsweise einfach einstellen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

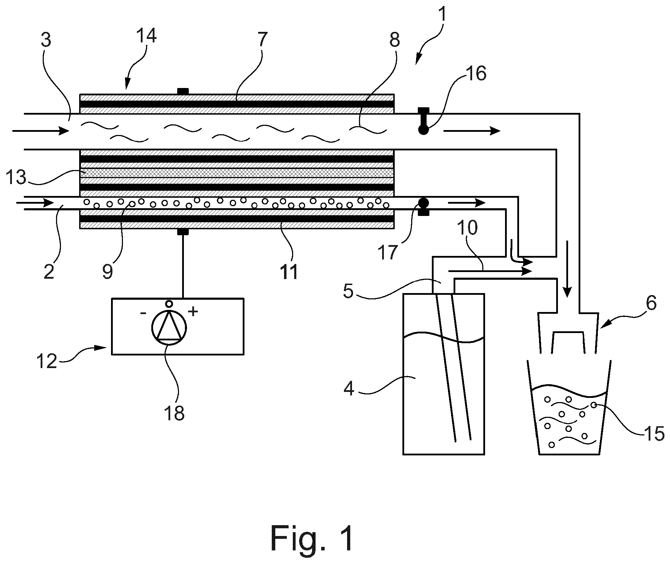

Die einzige Figur 1 zeigt eine mögliche Ausführungsform eines erfindungsgemäßen Kaffeeautomaten.

Entsprechend der Figur 1, weist ein erfindungsgemäßer Kaffeeautomat 1, beispielsweise ein Kaffeevollautomat, eine Luftansaugleitung 2, eine Dampfleitung 3 und eine mit einem Milchreservoir 4 verbundene bzw. verbindbare Milchleitung 5 auf. Die Dampfleitung 3 mündet dabei direkt in einen Milchschäumer 6, während die Luftansaugleitung 2 und die Milchleitung 5 stromauf des Milchschäumers 6 in die Dampfleitung 3 münden. Des Weiteren vorgesehen ist eine erste Heizeinrichtung 7 zur Erzeugung von Wasserdampf 8, wobei die erste Heizeinrichtung 7 beispielsweise wie dies gemäß der Figur 1 gezeigt ist, im Bereich der Dampfleitung 3 angeordnet ist, wobei es selbstverständlich auch denkbar ist, dass die erste Heizeinrichtung 7 nahe einem Wasserreservoir angeordnet ist. Über die erste Heizeinrichtung 7 wird somit aus Wasser Wasserdampf 8 erzeugt, der zum Milchschäumer 6 befördert wird und aufgrund eines Venturi-Effekts Luft 9 und Milch 10 ansaugt, um als Wasser-Dampf-Milchgemisch im Milchschäumer 6 zu Milchschaum 15 umgewandelt zu werden. Erfindungsgemäß ist nun noch eine zweite Heizeinrichtung 11 zum Beheizen der in der Luftansaugleitung 2 strömende Luft 9 vorgesehen, ebenso wie eine Steuereinrichtung 12 zum Steuern der Heizleistung zumindest der zweiten Heizeinrichtung 11.

Die zweite Heizeinrichtung 11 kann dabei als Mantelheizung um die Luftansaugleitung 2 herum ausgebildet sein, wobei ebenso denkbar ist, dass die zweite Heizeinrichtung 11 separat zur ersten Heizeinrichtung 7 ausgebildet ist, wie dies gemäß der Figur 1 dargestellt ist, wobei zwischen diesen beiden Heizeinrichtungen 7, 11 eine Isolierschicht 13 angeordnet ist. Alternativ ist selbstverständlich auch denkbar, dass die erste und die zweite Heizeinrichtung 7, 11 Bestandteil einer gemeinsamen Heizanordnung 14 sind.

Gemäß der Figur 1 ist dabei die zweite Heizeinrichtung 11 wärmeübertragend mit der Luftansaugleitung 2 verbunden und beheizt dadurch die darin strömende Luft 9. In gleicher Weise kann selbstverständlich auch die erste Heizeinrichtung 7 wärmeübertragend mit der Dampfleitung 3 verbunden sein und dadurch das darin strömende Wasser bzw. den darin strömenden Dampf durch ein Beheizen der Dampfleitung 3 erwärmen.

Mit der erfindungsgemäßen Steuereinrichtung 12 und der erfindungsgemäßen zweiten Heizeinrichtung 11 zum Beheizen der in der Luftansaugleitung 2 strömenden Luft 9 ist es erstmals möglich, die dem Milchschäumer 6 zuzuführende Luft 9 auf unterschiedliche Temperaturniveaus zu bringen und dadurch dem Mischvorgang mehr oder weniger Luft zuzuführen, was sich direkt auf das Porenvolumen bzw. das Milchschaumvolumen auswirkt. Wird beispielsweise mittels der Steuereinrichtung 12 die Heizleistung der zweiten Heizeinrichtung 11 erhöht, so wird die in der Luftansaugleitung 2 beim Herstellen von Milchschaum 15 mittels Unterdruck angesaugte Luft 9 stärker erwärmt, wodurch sich deren Dichte verringert und deren dynamische Viskosität erhöht. Durch die Erhöhung der Temperatur ist es somit möglich, während der gleichen Dampfdauer bzw. Herstellungsdauer von Milchschaum 15 dem Milchschäumer 6 mehr Luft 9 zuzuführen, wodurch das Milchschaumvolumen erhöht werden kann. Gleichzeitig kann hiermit ein positiver Effekt auf die Milchschaumtemperatur erwärmt werden, sofern die dem Milchschäumer 6 zugeführte Luft 9 erwärmt wird. Aufgrund der geringen Wärmekapazität von Luft 9, ist dies jedoch marginal.

Betrachtet man die Figur 1, so kann man erkennen, dass die Luftansaugleitung 2 stromauf des Milchschäumers 6 in die Milchleitung 5 mündet, und anschließend zusammen mit dieser in die Dampfleitung 3.

Stromab der ersten Heizeinrichtung 7 kann darüber hinaus im Bereich der Dampfleitung 3 ein erster Temperatursensor 16 angeordnet sein, wobei zusätzlich oder alternativ stromab der zweiten Heizeinrichtung 11 im Bereich der Luftansaugleitung 2 ein zweiter Temperatursensor 17 vorgesehen sein kann. Über die Temperatursensoren 16, 17, welche beispielsweise kommunizierend mit der Steuereinrichtung 12 verbunden sind, kann somit die Dampftemperatur bzw. die Temperatur der angesaugten Luft 9 erfasst werden.

Betrachtet man die Steuereinrichtung 12 näher, so kann man erkennen, dass an dieser ein Milchschaum-Wahlschalter 18 angeordnet ist, über welchen unterschiedliche Milchschaumarten auswählbar sind, wobei unterschiedliche Milchschaumarten unterschiedliche Heizleistungen der zweiten Heizeinrichtung 11 zugeordnet sind. Rein theoretisch ist dabei selbstverständlich auch denkbar, dass mittels des Milchschaum-Wahlschalters 18 lediglich die Heizleistung der zweiten Heizeinrichtung 11 und damit die Temperatur der über die Luftansaugleitung 2 angesaugten Luft 9 beeinflusst wird, so dass der Milchschaum-Wahlschalter 18 rein theoretisch auch als einfacher Temperaturschalter ausgebildet sein kann.

Mittels des erfindungsgemäßen Kaffeeautomaten 1 ist es für einen Verbraucher im privaten Bereich erstmals möglich, eine Barista-Funktion auszuüben und aktiv Einfluss auf herzustellenden Milchschaum 15 zu nehmen, was in dieser Weise bislang nicht möglich war, da die Herstellung von Milchschaum, insbesondere die Konsistenz und die Qualität des herzustellenden Milchschaums 15 durch vorgegebene geometrische Parameter festgelegt war.

Mit dem erfindungsgemäßen Kaffeeautomaten 1 ist es über die Steuereinrichtung 12 möglich, die Temperatur der angesaugten Luft 9 zu variieren und damit indirekt das Porenvolumen des herzustellenden Milchschaums 15. Die zweite Heizeinrichtung 11 kann dabei in die ohnehin bereits vorhandene erste Heizeinrichtung 7 integriert werden, wodurch eine Verwirklichung des Erfindungsgedankens mit keinem oder lediglich marginalem größeren Bauraumbedarf einhergeht. In diesem Fall könnte die von der ersten Heizeinrichtung 7 zur Verfügung gestellte Heizleistung auch für die Erwärmung des Luftstroms in der Luftansaugleitung 2 genutzt werden.

### Bezugszeichenliste

- 1: Kaffeeautomat
- 2: Luftansaugleitung
- 3: Dampfleitung
- 4: Milchreservoir
- 5: Milchleitung
- 6: Milchschäumer
- 7: Erste Heizeinrichtung
- 8: Wasserdampf
- 9: Luft
- 10: Milch
- 11: zweite Heizeinrichtung
- 12: Steuereinrichtung
- 13: Isolierschicht
- 14: Heizanordnung
- 15: Milchschaum
- 16: erster Temperatursensor
- 17: zweiter Temperatursensor
- 18: Milchschaum-Wahlschalter

## Patentansprüche

1. Kaffeeautomat (1) mit einer Luftansaugleitung (2), einer Dampfleitung (3) und einer mit einem Milchreservoir (4) verbindbaren Milchleitung (5), wobei die Dampfleitung (3) in einen Milchschäumer (6) mündet, wobei eine erste Heizeinrichtung (7) zur Erzeugung von Wasserdampf vorgesehen ist, wobei vorgesehen ist, das der Wasserdampf über die Dampfleitung (3) zu dem Milchschäumer (6) geleitet und Luft (9) über die Luftansaugleitung (2) sowie Milch (10) über die mit dem Milchreservoir (4) verbundene Milchleitung (5) angesaugt und zum Milchschäumer (6) geleitet wird, wobei eine zweite Heizeinrichtung (11) zum Beheizen der in der Luftansaugleitung (2) strömenden Luft (9) vorgesehen ist, und wobei eine Steuereinrichtung (12) zum Steuern der Heizleistung zumindest der zweiten Heizeinrichtung (11) vorgesehen ist.

2. Kaffeeautomat nach Anspruch 1, **dadurch gekennzeichnet, dass** die Luftansaugleitung (2) stromauf des Milchschäumers (6) in die Milchleitung (5) mündet.

3. Kaffeeautomat nach Anspruch 1 oder 2, **dadurch gekennzeichnet, dass** die erste Heizeinrichtung (7) wärmeübertragend mit der Dampfleitung (3) verbunden ist.

4. Kaffeeautomat nach Anspruch 2 oder 3, **dadurch gekennzeichnet, dass** die zweite Heizeinrichtung (11) wärmeübertragend mit der Luftansaugleitung (2) verbunden ist und durch die darin strömende Luft (9) beheizt.

5. Kaffeeautomat nach einem der vorhergehenden Ansprüche, **dadurch gekennzeichnet, dass** die erste und die zweite Heizeinrichtung (7, 11) separat zueinander ausgebildet sind.

6. Kaffeeautomat nach einem der Ansprüche 1 bis 4, **dadurch gekennzeichnet, dass** die erste und die zweite Heizeinrichtung (7, 11) Bestandteil einer Heizanordnung (14) sind.

7. Kaffeeautomat nach einem der vorhergehenden Ansprüche, **dadurch gekennzeichnet, dass** stromab der ersten Heizeinrichtung (7) im Bereich der Dampfleitung (3) ein erster Temperatursensor (16) und/oder dass stromab der zweiten Heizeinrichtung (11) im Bereich der Luftansaugleitung (2) ein zweiter Temperatursensor (17) vorgesehen sind/ist.

8. Kaffeeautomat nach einem der vorhergehenden Ansprüche, **dadurch gekennzeichnet, dass** an der Steuereinrichtung (12) ein Milchschaum-Wahlschalter (18) vorgesehen ist, über welchen unterschiedliche Milchschaumarten auswählbar sind, wobei unterschiedlichen Milchschaumarten unterschiedliche Heizleistungen der zweiten Heizeinrichtung (11) zugeordnet sind.

9. Verfahren zum Betreiben eines Kaffeeautomaten (1) nach einem der vorhergehenden Ansprüche, bei dem Dampf über eine Dampfleitung (3) zu einem Milchschäumer (6) geleitet und Luft (9) über eine Luftansaugleitung (2) sowie Milch (10) über eine mit einem Milchreservoir (4) verbundene Milchleitung (5) angesaugt und zum Milchschäumer (6) geleitet werden, wobei eine Einstellung zumindest eines Milchschaumparameters, insbesondere eines Porenvolumens, über ein Einstellen einer Heizleistung einer zweite Heizeinrichtung (11) zum Beheizen der in der Luftansaugleitung (2) strömenden Luft (9) erfolgt.

10. Verfahren nach Anspruch 9, **dadurch gekennzeichnet, dass** die Einstellung zumindest eines Milchschaumparameters über eine Steuereinrichtung (12) mit einem Milchschaum-Wahlschalter (18) erfolgt, über welchen unterschiedliche Milchschaumarten auswählbar sind, wobei unterschiedlichen Milchschaumarten unterschiedliche Heizleistungen der zweiten Heizeinrichtung (11) zugeordnet sind.

## Claims

1. Automatic coffee machine (1) with an air suction line (2), a vapour line (3) and a milk line (5) that can connect to a milk reservoir (4), wherein the vapour line (3) opens into a milk foamer (6), wherein a first heating device (7) for generating steam is provided, wherein it is provided that the steam is conducted to the milk foamer (6) via the vapour line (3) and air (9) is suctioned via the air suction line (2) and milk (10) is suctioned via the milk line (5) connected to the milk reservoir (4), and the air and milk are conducted to the milk foamer (6), wherein a second heating device (11) for heating the air (9) flowing in the air suction line (2) is provided, and wherein a control device (12) for controlling the heating power at least of the second heating device (11) is provided.

2. Automatic coffee machine according to claim 1, **characterised in that** the air suction line (2) opens into the milk line (5) upstream of the milk foamer (6).

3. Automatic coffee machine according to claim 1 or 2, **characterised in that** the first heating device (7) is connected to the vapour line (3) in a heat-transferring manner.

4. Automatic coffee machine according to claim 2 or 3, **characterised in that** the second heating device (11) is connected to the air suction line (2) in a heat-transferring manner and heats air (9) flowing therein.

5. Automatic coffee machine according to one of the preceding claims, **characterised in that** the first and the second heating device (7, 11) are embodied separately from one another.

6. Automatic coffee machine according to one of claims 1 to 4, **characterised in that** the first and the second heating device (7, 11) are constituent parts of a heating arrangement (14).

7. Automatic coffee machine according to one of the preceding claims, **characterised in that** a first temperature sensor (16) is provided downstream of the first heating device (7) in the region of the vapour line (3) and/or a second temperature sensor (17) is provided downstream of the second heating device (11) in the region of the air suction line (2).

8. Automatic coffee machine according to one of the preceding claims, **characterised in that** there is provision on the control device (12) for a milk foam selector switch (18), via which it is possible to select different milk foam types, wherein different milk foam types are assigned different heating powers of the second heating device (11).

9. Method for operating an automatic coffee machine (1) according to one of the preceding claims, in which vapour is conducted to a milk foamer (6) via a vapour line (3) and air (9) is suctioned via an air suction line (2) and milk (10) is suctioned via a milk line (5) connected to a milk reservoir (4), and the air and milk are conducted to the milk foamer (6), wherein setting at least one milk foam parameter, in particular a pore volume, takes place by setting a heating power of a second heating device (11) for heating the air (9) flowing in the air suction line (2).

10. Method according to claim 9, **characterised in that** the setting of at least one milk foam parameter takes place via a control device (12) with a milk foam selector switch (18), via which it is possible to select different milk foam types, wherein different milk foam types are assigned different heating powers of the second heating device (11).

## Revendications

1. Machine à café (1), comprenant un conduit d'aspiration d'air (2), un conduit de vapeur (3) et un conduit de lait (5) pouvant être raccordé à un réservoir de lait (4),
dans laquelle le conduit de vapeur (3) débouche dans un mousseur de lait (6) dans laquelle un premier dispositif de chauffage (7) est prévu pour générer de la vapeur d'eau,
dans laquelle il est prévu, que la vapeur d'eau soit acheminée jusqu'au mousseur de lait (6) via le conduit de vapeur (3), que de l'air (9) et du lait (10) soient aspirés respectivement via le conduit d'aspiration d'air (2) et via le conduit de lait (5) raccordé au réservoir de lait (4) et que ceux-ci soient acheminés jusqu'au mousseur de lait (6), dans laquelle un deuxième dispositif de chauffage (11) est prévu pour chauffer l'air (9) circulant dans le conduit d'aspiration d'air (2), et
dans laquelle un dispositif de commande (12) est prévu pour commander la puissance de chauffage du deuxième dispositif de chauffage (11).

2. Machine à café selon la revendication 1, **caractérisée en ce que** le conduit d'aspiration d'air (2) débouche dans le conduit de lait (5) en amont du mousseur de lait (6).

3. Machine à café selon la revendication 1 ou 2, **caractérisée en ce que** le premier dispositif de chauffage (7) est raccordé au conduit de vapeur (3) de façon à permettre un transfert de chaleur.

4. Machine à café selon la revendication 2 ou 3, **caractérisée en ce que** le deuxième dispositif de chauffage (11) est raccordé au conduit d'aspiration d'air (2) de façon à permettre un transfert de chaleur et chauffe l'air (9) circulant à l'intérieur de celui-ci.

5. Machine à café selon l'une des revendications précédentes, **caractérisée en ce que** le premier et le deuxième dispositif de chauffage (7, 11) sont réalisés séparément l'un de l'autre.

6. Machine à café selon l'une des revendications 1 à 4, **caractérisée en ce que** le premier et le deuxième dispositif de chauffage (7, 11) font partie d'un ensemble de chauffage (14).

7. Machine à café selon l'une des revendications précédentes, **caractérisée en ce qu'**un premier capteur de température (16) est disposé en aval du premier dispositif de chauffage (7), au niveau du conduit de vapeur (3), et/ou **en ce qu'**un deuxième capteur de température (17) est disposé en aval du deuxième dispositif de chauffage (11) au niveau du conduit d'aspiration d'air (2).

8. Machine à café selon l'une des revendications précédentes, **caractérisée en ce qu'**un sélecteur de mousse de lait (18) est prévu au niveau du dispositif de commande (12), au moyen duquel différentes qualités de mousse de lait peuvent être sélectionnées, dans laquelle des puissances de chauffage différentes du deuxième dispositif de chauffage (11) sont associées aux différentes qualités de mousse de lait.

9. Procédé de fonctionnement d'une machine à café (1) selon l'une des revendications précédentes, dans lequel de la vapeur est acheminée vers un mousseur de lait (6) via un conduit de vapeur (3), de l'air (9) et du lait (10) sont aspirés respectivement via le conduit d'aspiration d'air (2) et via le conduit de lait (5) raccordé au réservoir de lait (4) et sont acheminés jusqu'au mousseur de lait (6), dans lequel un réglage d'au moins un paramètre de mousse de lait, en particulier d'un volume des pores, est effectué par un réglage de la puissance de chauffage d'un deuxième dispositif de chauffage (11) destiné à chauffer l'air (9) circulant dans le conduit d'aspiration d'air (2).

10. Procédé selon la revendication 9, **caractérisé en ce que** le réglage d'au moins un paramètre de la mousse de lait est effectué au moyen d'un dispositif de commande (12), à l'aide d'un sélecteur de mousse de lait (18) permettant de sélectionner différentes qualités de mousse de lait,
dans lequel des puissances de chauffage différentes du deuxième dispositif de chauffage (11) sont associées aux différentes qualités de mousse de lait.
